(19) Europäisches Patentamt
European Patent Office
Office européen des brevets

(11) EP 2 067 821 B1

(12) **EUROPEAN PATENT SPECIFICATION**

(45) Date of publication and mention of the grant of the patent:
**12.03.2014 Bulletin 2014/11**

(21) Application number: **07828648.1**

(22) Date of filing: **20.09.2007**

(51) Int Cl.:
***C08L 59/00*** *(2006.01)* ***C08K 5/00*** *(2006.01)*
***C08L 51/04*** *(2006.01)*

(86) International application number:
**PCT/JP2007/068904**

(87) International publication number:
**WO 2008/038745 (03.04.2008 Gazette 2008/14)**

(54) **POLYACETAL RESIN COMPOSITION**

POLYACETALHARZZUSAMMENSETZUNG

COMPOSITION DE RÉSINE DE POLYACÉTAL

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **26.09.2006 JP 2006260026**

(43) Date of publication of application:
**10.06.2009 Bulletin 2009/24**

(73) Proprietor: **Polyplastics Co., Ltd.**
**Tokyo 108-8280 (JP)**

(72) Inventors:
- **KATSUCHI, Hirokazu**
**Fuji-shi**
**Shizuoka 416-8533 (JP)**
- **HASE, Hiroyuki**
**Fuji-shi**
**Shizuoka 416-8533 (JP)**

(74) Representative: **Broughton, Jon Philip et al**
**Barker Brettell LLP**
**First Floor, Atrium Court**
**15-17 Jockey's Fields**
**London WC1R 4BW (GB)**

(56) References cited:
**EP-A1- 0 549 338**
**EP-A2- 0 430 215**
**EP-A2- 0 561 582**
**WO-A1-2004/058875**
**WO-A1-2004/058875**
**JP-A- 5 179 104**
**JP-A- 5 255 570**
**JP-A- 5 255 570**
**JP-A- 6 248 162**
**JP-A- 6 248 162**
**JP-A- 7 165 935**
**JP-A- 7 165 935**
**JP-A- 7 195 476**
**JP-A- 7 195 476**
**JP-A- 7 195 496**
**JP-A- 7 195 496**
**JP-A- 05 179 103**
**JP-A- 05 179 104**
**JP-A- 07 165 935**
**JP-A- 07 195 476**
**JP-A- 07 195 496**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 067 821 B1

## Description

Technical Field

The present invention relates to a polyacetal resin composition having excellent weather resistance and suppressed surface gloss, and having extremely reduced generation of formaldehyde.

Background Art

As is well known, a polyacetal resin has been recently used in a very wide range of fields as an engineering resin being excellent in physical properties such as mechanical properties and electrical properties and chemical properties such as chemical resistance and heat resistance. However, as a result of expansion of application fields where a polyacetal resin is used, there is a case where specialty is further required for properties as a material.

One example of such specialties is a demand for development of a material having excellent weather resistance and suppressed surface gloss, and having extremely reduced generation of formaldehyde. For example, in the fields of interior and exterior parts of automobiles, and optical equipments, in many cases, materials having less gloss, namely, less light reflection are demanded for the purpose of suppressing stimulation to eyes due to light reflection, providing feeling of quality and preventing malfunctions of equipments due to light reflection. Also, in the fields of electrical equipments and building materials, combined use of various materials according to the intended purpose is increasing. Since a polyacetal resin has satisfactory surface gloss as compared with other general resin materials, it lacks harmony with other materials in products prepared by combined use of it with other various materials, and therefore, for the use in the field where emphasis is placed on surface appearance, materials having regulated gloss are demanded.

In addition, since many of resin molded articles used in the above-mentioned fields are exposed to sunlight, excellent weather resistance is required for resin materials.

Further, in these fields, resin materials having extremely reduced generation of formaldehyde are strongly demanded from the viewpoint of environmental sanitation and prevention of undesirable actions on precision equipment.

To cope with such a demand, there is disclosed blending of a weathering (light) stabilizer and a core-shell polymer to a polyacetal resin as a technology for imparting low glossiness and weather resistance (JP-A 5-179104).

Also, in order to reduce the generation of formaldehyde, blending of various formaldehyde scavengers to a polyacetal resin is known, for example, blending of an oxazoline compound (JP-A 5-125255), a glyoxydiureide compound (JP-A 10-182928), a hydrazide compound (JP-A 10-298201, JP-A 2005-162909, JP-A 2005-163019), and a guanamine compound (WO-A 2004/058875) as a formaldehyde scavenger.

Several documents describe previous efforts to improve features of polyacetal resins. For example polyacetal resins including isocynate or like compounds have been used in order to improve durability (JP7165935A), wear resistance (EP0430215A), blow molding properties (JP7195496A), extrusion properties (JP7195476A), staining properties (JP6248162A), and surface gloss or glare (EP0549338A, EP0561582A, JP5255570A). To the extent that each of these documents proposes the inclusion of a weathering stabilizer, no detail or example is provided.

Disclosure of the Invention

According to the composition disclosed in JP-A 5-179104, both of weather resistance and low glossiness are imparted. Also, the reduction of formaldehyde generation can be expected by the compositions disclosed in JP-A 5-125255, JP-A 10-182928, JP-A 10-298201, JP-A 2005-162909, JP-A 2005-163019, and WO-A 2004/058875. However, polyacetal resin materials having excellent weather resistance and suppressed surface gloss and having extremely reduced generation of formaldehyde cannot be obtained by the technologies disclosed in these publications.

It is extremely difficult to obtain resin materials having all of such characteristics at the same time by selecting components to be blended to a polyacetal resin and adjusting blending amounts thereof.

Namely, antagonism is generated on the targeted effects depending on components to be used or the combination thereof, and when any of weather resistance, low glossiness and properties of reducing formaldehyde is intended to be improved, it is often the case that other characteristics are impaired.

For example, when various stabilizer components are blended to the resin composition having weather resistance and low glossiness disclosed in the above-mentioned JP-A 5-179104 to reduce the generation of formaldehyde, it is often the case that low glossiness is impaired, and thus a resin material having all of the targeted properties at the same time cannot be obtained.

It is an object of the present invention to provide a polyacetal resin material having excellent weather resistance and suppressed surface gloss, and having extremely reduced generation of formaldehyde.

The inventors of the present invention have made extensive studies to develop a polyacetal resin material, which achieves the above-mentioned objects, having excellent weather resistance and suppressed surface gloss, and

having extremely reduced generation of formaldehyde, and as a result, have found unexpected actions by blending a weathering (light) stabilizer, a core-shell polymer and an iso (thio) cyanate compound, and have completed the present invention.

Namely, the present invention relates to a polyacetal resin composition comprising:

100 parts by weight of (A) a polyacetal resin;
0.01 to 5 parts by weight of (B) a weathering stabilizer wherein the weathering stabilizer (B) is a combination of one, two or more selected from the group consisting of a benzotriazole-based compound, a benzophenone-based compound, an oxanilide-based compound, an aromatic benzoate-based compound, and a cyanoacrylate-based compound with a hindered amine-based compound which has a sterically hindered amino group of a tertiary nitrogen;
1 to 50 parts by weight of (C) a core-shell polymer having a core of rubbery polymer and a shell of a glassy polymer composed of a vinyl-based copolymer wherein the rubbery polymer is a rubbery polymer formed by polymerizing monomers including a conjugated diene, an alkylacrylate having an alkyl group with 2 to 8 carbon atoms or a mixture thereof and wherein the glassy polymer is composed of a vinyl-based copolymer having an oxygen-containing polar group; and 0.01 to 5 parts by weight of (D) a compound selected from the group consisting of a diisocyanate compound, a diisothiocyanate compound, a dimer thereof, and a trimer thereof.

According to the present invention, there is provided a polyacetal resin composition having excellent weather resistance and suppressed surface gloss, and having extremely reduced generation of formaldehyde.

In addition, an isocyanate compound, an isothiocyanate compound, and a modified compound thereof to be blended in the present invention contributes to the reduction of formaldehyde generation and further reduction in surface gloss.

Therefore, even when a component being effective for the reduction of formaldehyde generation but impairing low glossiness is blended to the resin composition of the present invention, further reduction of formaldehyde generation becomes possible while maintaining glossiness at a sufficiently low level.

The polyacetal resin composition of the present invention can be suitably used for applications such as interior parts of automobile (for example, regulator handle, interior clip, ventilator knob, etc.), optical equipment, building materials and domestic utensils by making effective use of the excellent properties as mentioned above.

Detailed Description of the Invention

The present invention will be explained below in detail. First, the polyacetal resin (A) to be used in the present invention is a polymer compound having oxymethylene group ($-CH_2O-$) as a main component unit, and may be any of a polyoxymethylene homopolymer, or a copolymer, terpolymer or block copolymer having a small amount of component unit other than the oxymethylene group. Also, a molecule of the polyacetal resin may be one having not only a linear structure but also a branched or crosslinked structure. Also the degree of polymerization thereof is not limited particularly.

Next, the weathering (light) stabilizer (B) to be used in the present invention is one or more selected from (1) a benzotriazole-based compound, (2) a benzophenone-based compound, (3) an oxanilide-based compound, (4) an aromatic benzoate-based compound, (5) a cyanoacrylate-based compound, in combination with a hindered amine-based compound. Examples of these compounds are as follows.

First, examples of (1) a benzotriazole-based compound are 2-(2'-hydroxy-5'-methyl-phenyl)benzotriazole, 2-(2'-hydroxy-3',5'-di-t-butyl-phenyl)benzotriazole, 2-(3,5-dit-amyl-2-hydroxyphenyl)benzotriazole, 2-(2'-hydroxy-3',5'-di-isoamyl-phenyl)benzotriazole, 2-(2H-benzotriazole-2-yl)-4,6-bis(1-methyl-1-phenylethyl)-phenol, 2-(2'-hydroxy-4'-octoxyphenyl)benzotriazole, and the like. Especially preferred is 2- (2H-benzotriazole-2-yl) -4, 6-bis(1-methyl-1-phenylethyl) phenol.

Next, examples of (2) a benzophenone-based compound are 2,4-dihydroxybenzophenone, 2-hydroxy-4-methoxybenzophenone, 2-hydroxy-4-octoxybenzophenone, 2-hydroxy-4-dodecyloxybenzophenone, 2,2'-dihydroxy-4-methoxybenzophenone, 2,2'-dihydroxy-4,4'-dimethoxybenzophenone, 2-hydroxy-4-methoxy-5-sulfobenzophenone, 2-hydroxy-4-oxybenzylbenzophenone, and the like.

Further, examples of (3) an oxanilide-based compound are N-(2-ethyl-phenyl)-N'-(2-ethoxy-5-t-butylphenyl) oxalyl diamide, N-(2-ethyl-phenyl)-N'-(2-ethoxy-phenyl)oxalyl diamide, and the like; examples of (4) an aromatic benzoate-based compound are p-t-butylphenyl salicylate, p-octylphenyl salicylate, and the like; and examples of (5) a cyanoacrylate-based compound are 2-ethylhexyl-2-cyano-3,3-diphenylacrylate, ethyl-2-cyano-3,3-diphenylacrylate, and the like.

Examples of (6) a hindered amine-based compound are piperidine derivatives having a sterically hindered group, and examples thereof are 4-acetoxy-2,2,6,6-tetramethylpiperidine, 4-stearoyloxy-2,2,6,6-tetramethylpiperidine, 4-acryroyloxy-2,2,6,6-tetramethylpiperidine, 4-methoxy-2,2,6,6-tetramethylpiperidine, 4-benzoyloxy-2,2,6,6-tetramethylpiperidine, 4-cyclohexyloxy-2,2,6,6-tetramethylpiperidine, 4-phenoxy-2,2,6,6-tetramethylpiperidine, 4-benzyloxy-2,2,6,6-tetramethylpiperidine, 4-(phenylcarbamoyloxy)-2,2,6,6-tetramethylpiperidine, bis(2,2,6,6-tetramethyl-4-piperidyl)oxalate, bis(2,2,6,6-tetramethyl-4-piperidyl)maloriate, bis(2,2,6,6-tetramethyl-4-piperidyl)adipate, bis(2,2,6,6-tetramethyl-4-piperidyl)sebacate, bis(1,2,2,6,6-pentamethyl-4-piperidyl)sebacate, bis(2,2,6,6-tetramethyl-4-piperidyl) terephthalate, 1,2-bis(2,2,6,6-tetramethyl-4-piperidyloxy)ethane, bis(2,2,6,6-tetramethyl-4-piperidyl)hexamethylene-1,6-dicarbamate, bis(1-methyl-2,2,6,6-tetramethyl-4-piperidyl)-adipate, tris(2,2,6,6-tetramethyl-4-piperidyl)benzene-1,3,5-tricaboxylate, and the like. In addition, there can be used high-molecular-weight polycondensation products of piperidine derivatives, for example, polycondensation products of dimethyl succinate-1-(2-hydroxyethyl)-4-hydroxy2,2,6,6-tetramethylpiperidine. Preferred is bis(2,2,6,6-tetramethyl-4-piperidyl)sebacate. In order to prevent unsatisfactory appearance due to bleeding of a hindered amine compound, it is effective and preferable to use a hindered amine-based compound having a sterically hindered amino group of tertiary nitrogen, for example, a condensation product of 1,2,3,4-butanetetracarboxylic acid, 1,2,2,6,6-pentamethyl-4-piperidinol and β, β, β', β'-tetramethyl-3,9-(2,4,8,10-tetraoxaspiro[5,5]undecane)-diethanol.

In the present invention, one, two or more of these weathering (light) stabilizers can be blended. The combined use of the weathering (light) stabilizers of (1) to (5) and (6) the hindered amine-based compound is used and further, the combined use of (1) the benzotriazole-based compound and (6) the hindered amine-based compound is most preferred. The blending amount of weathering (light) stabilizer (B) is properly 0.01 to 5 parts by weight, especially preferably 0.02 to 3 parts by weight to 100 parts by weight of the polyacetal resin (A).

When the blending amount of weathering (light) stabilizer (B) is excessively small, the effect cannot be expected, and when too much amounts of the stabilizer are unnecessarily added, they not only become disadvantageous from an economical point of view but also result in problems such as the lowering of mechanical properties and the contamination of a metallic die. The ratio of (6) the hindered amine-based compound to the sum of weathering (light) stabilizers of (1) to (5) is preferably within the range of 9/1 to 1/9 in a weight ratio.

Next, the core-shell polymer (C) used in the present invention is one having a core of a rubbery polymer and a shell of a glassy polymer composed of a vinyl-based copolymer, and is obtained, for example, by a seed emulsion polymerization method, usually by a continuous multi-stage emulsion polymerization method where polymers prepared in the preceding stage are sequentially coated with polymers in the following stage.

In the core-shell polymer having an intermediate phase to be hereinafter described, there is a case where the intermediate phase is formed by a multi-stage emulsion polymerization method in which polymers in the later stage invade into polymers prepared in the former stage.

At the time for the polymerization to generate particles, it is preferable to add monomers, a surfactant and water into a reactor and then add a polymerization initiator to start emulsion polymerization reactions. The polymerization at the first stage is a reaction to form a rubbery polymer.

The monomer constituting the rubbery polymer is a conjugated diene, alkylacrylate having an alkyl group with 2 to 8 carbon atoms or a mixture thereof.

The rubbery polymer is formed by polymerization of these monomers.

Examples of conjugated diene are butadiene, isoprene, chloroprene and the like, and especially butadiene is preferably used.

Examples of alkylacrylate having an alkyl group with 2 to 8 carbon atoms are ethyl acrylate, propyl acrylate, butyl acrylate, cyclohexyl acrylate, 2-ethylhexyl acrylate and the like, and especially butyl acrylate is preferably used.

In the polymerization at the first stage, it is possible to copolymerize monomers being copolymerizable with conjugated diene, alkylacrylate and the like, for example, aromatic vinyls such as styrene, vinyl toluene or α-methylstyrene, aromatic vinylidene, vinyl cyanides such as acrylonitrile or methacrylonitrile, vinylidene cyanide, alkyl methacrylates such as methyl methacrylate or butyl methacrylate, and the like.

When conjugated diene is not contained in the polymerization at the first stage, or even if it is contained, when its amount is not more than 20 % by weight based on the whole monomers in the first stage, a polymer having high impact resistance can be prepared by using a small amount of a crosslinkable monomer and a grafting monomer.

Examples of a crosslinkable monomer are aromatic divinyl monomer such as divinyl benzene, and alkane polyol polyacrylates or alkane polyol polymethacrylates such as ethyleneglycol diacrylate, ethyleneglycol dimethacrylate, butyleneglycol diacrylate, hexanediol diacrylate, hexanediol dimethacrylate, oligoethylene glycol diacrylate, oligoethylene glycol dimethacrylate, trimethylolpropane diacrylate, trimethylolpropane dimethacrylate, trimethylolpropane triacrylate or trimethylolpropane trimethacrylate, and especially butyleneglycol diacrylate and hexanediol diacrylate are preferably used. Examples of a grafting monomer are allyl esters of unsaturated carboxylic acids such as allyl acrylate, allyl methacrylate, diallyl maleate, diallyl fumarate or diallyl itaconate, and especially allyl methacrylate is preferably used. Such a crosslinkable monomer or a grafting monomer is used in an amount of 0 to 5 % by weight, preferably 0.1 to 2 % by weight based on the whole monomers used in the first stage.

The core-shell polymer (C) to be used in the present invention is one comprising the glassy polymer composed of a vinyl-based copolymer where the shell phase has an oxygen-containing polar group. Through the use of the core-shell polymer having the shell formed by a vinyl-based copolymer where the shell phase has an oxygen-containing polar

group, further excellent flatting effect (effect of reducing gloss) is achieved.

Examples of such an oxygen-containing polar group are hydroxyl group, a group having ether bond (-0-) (for example, glycidyl group), amide group (-CONH-), imide group represented by

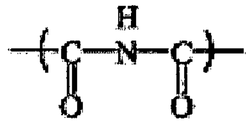

and nitrile group ($-NO_2$) and especially, hydroxyl group and a group having ether bond are preferred.

Example of a monomer constituting the vinyl-based copolymer having the above-mentioned oxygen-containing polar group is (meth)acrylate of alcohol having two or more oxygen-containing polar groups in its molecule. The alcohol having two or more oxygen-containing polar groups in its molecule is alcohol having at least one oxygen-containing polar group other than hydroxyl group in an alcohol moiety. Examples of (meth) acrylate of an alcohol having oxygen-containing polar groups are (meth)acrylates of alcohol having hydroxyl group and/or glycidyl group. Examples of (meth) acrylates of an alcohol having hydroxyl group are hydroxyethyl (meth) acrylate, hydroxypropyl (meth)acrylate and the like, and hydroxyethyl methacrylate is preferably used. Examples of (meth) acrylates of an alcohol having glycidyl group are glycidyl methacrylate, glycidyl acrylate and the like, and glycidyl methacrylate is preferably used. In addition, vinyl monomers having oxygen-containing polar groups other than the above-mentioned (meth) acrylates such as allyloxyethanol or allyl glycidyl ether can also be used as a component of the vinyl-based copolymer having an oxygen-containing polar group. Examples of monomers constituting the glassy polymer other than the above-mentioned monomers having an oxygen-containing polar group are vinyl polymerizable monomers, for example, alkyl (meth)acrylates such as methyl (meth)acrylate, ethyl (meth)acrylate or butyl (meth) acrylate, aromatic vinyls such as styrene, vinyl toluene or α-methylstyrene, aromatic vinylidene, vinyl cyanides such as acrylonitrile or methacrylonitrile, vinylidene cyanide and the like, and especially, methyl methacrylate and styrene-acrylonitrile are preferably used. The proportion of this shell phase is preferably 10 to 50 % by weight based on the whole core-shell polymer. When the proportion of the shell phase is less than this range, there is a possibility that weather resistance is impaired, and when the proportion exceeds the mentioned range, there is a case where mechanical properties of the resin composition obtained by melt-kneading the produced core-shell polymer are not sufficient.

Also, an intermediate phase may exist between the first polymerization phase and the last polymerization phase. For example, the intermediate phase is formed by a seed emulsion polymerization of a polymerizable monomer having a functional group such as glycidyl methacrylate, methacrylic acid or hydroxyethyl methacrylate, a polymerizable monomer forming a glassy polymer such as methyl methacrylate or a polymerizable monomer forming a rubbery polymer such as butyl acrylate. Such an intermediate phase can be selected in various ways depending on desired properties of the core-shell polymer.

Examples of the structure of the core-shell polymer having such an intermediate phase are a multi-stage structure where another layer exists between the core and the shell and a salami structure where an intermediate phase is dispersed in the core in the form of fine particles. In the core-shell polymer having a salami structure, there is also an extreme case where an intermediate phase to be dispersed forms a new core in the center of the core. A core-shell polymer having such a structure may be generated when a monomer represented by styrene is used as a monomer constituting the intermediate phase. Also, when a core-shell polymer having an intermediate phase is used, there may be improvement in impact resistance and bending modulus of elasticity, increase in thermal deformation temperature and improvement in appearance (inhibition of surface peeling and pearl gloss and change in color tone due to change in refractive index).

The emulsion polymerization for preparing the core-shell polymer of the present invention is carried out by using a surfactant, for example, a nonionic surfactant, an oligomer-type anionic surfactant or an oligomer-type nonionic surfactant and a polymerization initiator, for example, an azo-type polymerization initiator or a peroxide-type polymerization initiator. There can be used, as a nonionic surfactant, most of surfactants widely used generally, for example, ether-type surfactants such as polyoxyethylene nonylphenyl ether, polyoxyethylene stearyl ether or polyoxyethylene lauryl ether; ester-type surfactants such as polyoxyethylene monostearate; sorbitan ester-type surfactants such as polyoxyethylene sorbitan monolaurate; and block polymer-type surfactants such as polyoxyethylene-polyoxypropylene block copolymer. An oligomer-type anionic surfactant and an oligomer-type nonionic surfactant are oligomer-type surfactants which have been used for polymers prepared by emulsion polymerization in special applications, and, for example, oligomer-type surfactants of the following formula are used.

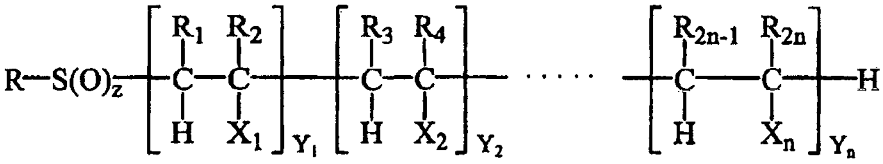

wherein R represents an alkyl group having 5 to 20, preferably 6 to 12 carbon atoms; n represents an integer of 2 or more; z is 0, 1 or 2, preferably 0 or 1, especially 0; each of $R_{2n-1}$ is- H, $-CH_3$, $-C_2H_5$ or -COOH; each of $R_{2n}$ is -H, $-CH_3$, $-C_2H_5$, -COOH or $-CH_2COOH$; $X_n$ is -COOH, $-CONH_2$, $-OCH_3$, $-OC_2H_5$, $-CH_2OH$,

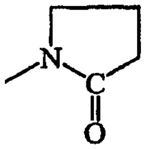

,

$-COOC_2H_4OH$, $-COOC_3H_6OH$, $-CONHCH_2OH$, $-CONHCH_3$, $-CONHC_2H_5$, $-CONHC_3H_7$, $-COOCH_3$, $-COOC_2H_5$, -CN, $-OCOCH_3$, $-OCOC_2H_5$ or

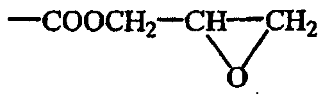

.

The molecular weight of the oligomer type surfactant to be used in the present invention is about 200 to 5,000, preferably about 1,500 to 3,000, and a degree of polymerization $(\sum_{a=1}^{n} Y_a)$ is about 6 to 50.

The oligomer-type surfactant is water soluble or is converted to a water soluble salt by a reaction with oxide, hydroxide or alcohol. Examples of the water soluble salt are alkali metal salt, alkali earth metal salt, heavy metal salt of group III, ammonium salt, and substituted ammonium salt, and especially ammonium salt is preferred. As described, for example, in JP-B 47-34832 or the like, the oligomer-type surfactant is prepared by causing a proper monomer to conduct addition polymerization in the presence of alkyl mercaptan in a solvent containing no water, or then oxidizing into a corresponding sulfoxide or sulfone by using hydrogen peroxide or ozone. Examples of the alkyl mercaptan to be used are n-octyl mercaptan, n-dodecyl mercaptan, t-dodecyl mercaptan, and n-decyl mercaptan. Examples of the monomer to be used are α,β-ethylenic unsaturated monomers having one or more polar groups in its molecule such as (meth) acrylic acid, α-ethylacrylic acid, β-methyl acrylic acid, α,β-dimethyl acrylic acid, caproic acid, itaconic acid, fumaric acid, maleic acid, (meth) acrylamide, vinyl ethyl ether, vinyl methyl ether, allyl alcohol, vinyl pyrrolidone, (meth)acrylonitrile, ethyl acrylonitrile, methyl(meth)acrylate, ethyl acrylate, hydroxyethyl (meth)acrylate, hydroxypropyl (meth)acrylate, vinyl acetate, vinyl propionate, N-isopropylacrylamide, N-ethylacrylamide, N-methylacrylamide, glycidyl (meth)acrylate or N-methylolacrylamide. Preferred examples of a solvent to be used in the addition polymerization are lower alcanols such as methanol, ethanol or isopropanol. Usually the above-mentioned addition polymerization is carried out at a temperature within the range of about 20°C to 100°C. In the preparation of the core-shell polymer to be used in the present invention, the amount of the surfactant is optionally selected depending on the ability of stabilizing particles of the surfactant. Examples of the polymerization initiator are azo-type polymerization initiators such as azobis isobutyronitrile, dimethyl 2,2'-azobis(isobutyrate) or 2,2'-azobis(2-aminopropane)dihydrochloride, and peroxide-type polymerization initiators such as cumene hydroperoxide, diisopropylbenzene hydroperoxide or hydrogen peroxide, and these can be used alone or can be used in combination of two or more thereof. When emulsion polymerization is carried out in a reaction system using the above-mentioned nonionic surfactant and/or oligomer-type surfactant and an azo-type and/or peroxide-type polymerization initiator, there can be obtained a core-shell polymer substantially containing no sulfur oxide compound or containing a very small amount of sulfur oxide compound. The content of sulfur oxide compound (for example, sulfate, sulfuric ester salt, persulfate, sulfite, sulfonate, etc.) means an amount which is not detected by usual qualitative analysis of sulfur oxide compound. Example of a measuring method is a method of pouring 5 g of a sample (core-shell polymer) into a 50 ml conical flask, adding 20 ml of ion exchange water, stirring for three hours with a magnetic stirrer, then dividing the solution filtrated with No.5C filter paper into halves, adding 0.5 ml of 1 % aqueous solution of barium chloride to one

solution, and comparing and observing the occurrence of turbidity (qualitative analysis of sulfur ion).

This core-shell polymer substantially containing no sulfur oxide compound is stably melt-blended with the polyacetal resin, and the polyacetal resin composition having excellent flatting properties, thermal stability, impact resistance and elongation is obtained.

The core-shell polymer to be used in the present invention can be obtained in the form of particles, flakes or powder, for example, by the following method.

(1) Latex is prepared by known seed emulsion polymerization method by using the above-mentioned surfactant and polymerization initiator.
(2) Next, a polymer is separated by freezing and thawing the latex.
(3) Subsequently, centrifugal dehydration and drying are carried out.

By such a method mentioned above, a lot of solvents and surfactants used during the emulsion polymerization can be removed. Or, a polymer can be taken out by drying the latex as it is at the stage of (2). In addition, a spraying and drying method with a spray dryer is also one of methods for taking a core-shell polymer out of latex. The thus obtained core-shell polymer may be formed into pellets with an extruder and a pelletizer, or can be melt-kneaded as it is with a resin.

In the present invention, the additive amount of core-shell polymer (C) is 1 to 50 parts by weight, preferably 3 to 20 parts by weight to 100 parts by weight of the polyacetal resin (A). When the amount of core-shell polymer is too small, an effect of reducing surface glossiness cannot be sufficiently exerted, and even if the polymer is added unnecessarily and excessively, the lowering of mechanical properties, especially rigidity to a large extent is found, and there are undesirable effects on thermal stability.

By adding and blending the core-shell polymer (C) together with the weathering (light) stabilizer (B) to the polyacetal resin, the gloss of a surface of the obtained molded article is uniformly reduced, thus giving settled feeling of quality and enhancing weather resistance synergistically. Further, excellent mechanical properties of the polyacetal resin are maintained. It can be considered that the reason why such an effect of reducing glossiness is exhibited is that in a molded article obtained by adding and blending the core-shell polymer to the polyacetal resin, the core-shell polymer is dispersed on its surface in the form of about 0.5 μm to about 2 μm particles, thereby making the surface of the polyacetal resin rough, and at the same time, oxygen-containing polar groups are uniformly dispersed on the surface of the molded article, thus modifying the surface of the polyacetal resin molded article to reduce gloss of the surface. With respect to a degree of surface gloss, glossiness measured by the method explained infra (use of mirror-finished die) is practically preferably not more than 25 %, further preferably not more than 20 %, especially preferably not more than 15 %.

The polyacetal resin composition of the present invention is characterized by further adding and blending the compound (D) selected from diisocyanate compound, a diisothiocyanate compound, and a dimer or trimer thereof in addition to the above-mentioned components (A) to (C). By blending the compound (D), the generation of formaldehyde is extremely reduced while maintaining excellent weather resistance and low glossiness achieved by the components (A) to (C).

In addition, incorporation of the compound (D) provides a function of further reducing gloss.

Accordingly, even by blending other components to the resin composition of the present invention containing the components (A) to (D), a low glossiness is scarcely impaired greatly.

For example, when various formaldehyde scavengers such as a guanamine compound, a hydrazide compound and triazine compound are blended to a composition having an excellent weather resistance and a low glossiness containing the above-mentioned components (A) to (C) for the purpose of reducing the generation of formaldehyde, a low glossiness is impaired, but even if such formaldehyde scavengers are blended to the resin composition of the present invention containing the component (D), a low glossiness is not impaired, and further reduction in the generation of formaldehyde can be attained, which is preferable. The effect of blending the compound (D) mentioned above has been unexpectable.

Preferred examples of the compound (D) used for such purpose are isocyanate compounds represented by the formula O=C=N-R-N=C=O (R=divalent group), isothiocyanate compounds represented by S=C=N-R-N=C=S (R=divalent group), and dimers or trimers thereof.

Examples of the isocyanate compound are 4,4'-methylenebis(phenylisocyanate), 2,4-tolylene diisocyanate, 2,6-tolylene diisocyanate, xylene diisocyanate, 1,6-hexamethylene diisocyanate, isophorone diisocyanate and 1,5-naphthalene diisocyanate, examples of the isothiocyanate compound are diisothionates corresponding to the above-mentioned isocyanate compounds, and examples of the modified compounds thereof are dimers and trimers of these isocyanate compounds and isothiocyanate compounds. Any of these compounds are effectively used. However, in consideration of various properties such as the degree of discoloration due to melt-treatment and the like, or safety in handling, 4,4'-methylenebis(phenylisocyanate), isophorone diisocyanate, 1,5-naphthalene diisocyanate, 1,6-hexamethylene diisocyanate, 2,4-tolylene diisocyanate, 2,6-tolylene diisocyanate, and dimers and trimers thereof are especially

desirable.

It is estimated that in the compound (D) selected from an isocyanate compound, an isothiocyanate compound and a modified compound thereof, formaldehyde is chemically bonded directly to the isocyanate group, and thus the generation of formaldehyde is reduced.

Also, it is estimated that when the compound (D) exists at melt-kneading of the components (A) to (C), the component (D) reacts with the polyacetal resin (A) and the core-shell polymer (C) and in some cases, partly forms a three-dimensional structure, thereby enhancing the affinity of (A) for (C) and the adhesion of an interface between the both and nearly homogeneously dispersing the core-shell polymer (C), and as a result, function of maintaining low glossiness is exhibited.

In the present invention, the amount of compound (D) selected from a diisocyanate compound, a diisothiocyanate compound and a dimer or trimer thereof is 0.01 to 5 parts by weight, preferably 0.05 to 1 part by weight to 100 parts by weight of the polyacetal resin (A).

When the amount of component (D) is too small, the effect of reducing the generation of formaldehyde is not exhibited, and the adhesion of an interface between the polyacetal resin and the core-shell polymer becomes insufficient, and as a result, function of maintaining low glossiness is not exhibited. On the contrary, the addition of the component (D) in an excessively large amount causes interference in kneading operation.

Further, various stabilizers and additives can be blended to the polyacetal resin composition of the present invention.

For example, in order to enhance stability for oxidation decomposition, it is preferable to blend a hindered phenol-based antioxidant in an amount of 0.01 to 3 parts by weight to 100 parts by weight of the polyacetal resin (A). It is also preferable to blend a nitrogen-containing compound having formaldehyde-scavenging function such as a guanamine compound, a hydrazide compound, a triazine compound or polyamide in an amount of 0.01 to 3 parts by weight to 100 parts by weight of the polyacetal resin (A). Preferred nitrogen-containing compounds are a guanamine compound, a hydrazide compound and a triazine compound. As mentioned above, the addition of these compounds contributes to the reduction in the generation of formaldehyde, but weather resistance and low glossiness are impaired when such nitrogen-containing compounds are blended to a composition prepared by blending the weathering (light) stabilizer (B) and the core-shell polymer (C) to a polyacetal resin for imparting weather resistance and low glossiness. On the contrary, in the polyacetal resin composition of the present invention prepared by blending the compound (D) selected from an isocyanate compound, an isothiocyanate compound and a modified compound thereof in addition to the weathering (light) stabilizer (B) and the core-shell polymer (C), even if nitrogen-containing compounds as mentioned above are blended, the function of reducing the generation of formaldehyde is exhibited without impairing weather resistance and low glossiness, which is very preferable.

Furthermore, it is also preferable to blend an oxide, hydroxide, inorganic acid salt or fatty acid salt of alkali metals or alkali earth metals. In addition, blending 0.01 to 5 parts by weight of one or more compounds selected from a fatty acid ester, an aliphatic ether, a polyhydric alcohol and a polyalkylene glycol to 100 parts by weight of the polyacetal resin (A) can help to supplementarily enhance weather resistance which is one of targeted physical properties in the present invention.

In addition, it is preferable to blend a coloring component to the composition of the present invention in an amount of 0.1 to 10 parts by weight to 100 parts by weight of the polyacetal resin (A). The coloring component is not limited particularly, and there can be used, for example, anthraquinone-type dyes; azo-type, phthalocyanine-type, perylene-type, quinacridone-type, anthraquinone-type, indolinone-type, titanium-type, iron oxide-type and cobalt-type pigments; and carbon black. Especially when blending carbon black as a coloring component, there is an effect of further enhancing weather resistance.

To the composition of the present invention can be blended various known additives, for example, a lubricant, a nucleating agent, a mold releasing agent, an antistatic agent, a surfactant, an organic polymer material, and various fillers in the form of fiber, particle or sheet, for the purpose of imparting characteristics desired depending on the intended use thereof.

The composition of the present invention can be prepared using known equipment by a method known as a method for preparing resin compositions. For example, there can be used any method such as a method of mixing all of components constituting a composition to obtain a mixture having specific proportions of components; a method of supplying a mixture of all the components constituting a composition to a single screw or twin screw extruder and melt-kneading the mixture to obtain a composition; a method of supplying a part of components constituting a composition in the middle of an extruder in the above-mentioned method and melt-kneading to obtain a composition in the form of pellet; a method of previously preparing a composition (master batch) by melt-kneading a part of components constituting a composition and then mixing remaining components to the master batch to obtain a mixture having specific proportions of components; a method of melt-kneading the above-mentioned mixture with an extruder to obtain a composition in the form of pellet; a method of preparing two or more compositions having different proportions of components and mixing them to obtain a mixture having specific proportions of components; or a method of melt-kneading the above-mentioned

mixture with an extruder to obtain a composition in the form of pellet. In these methods, it is effective to use partly or wholly pulverized components in order to satisfactorily disperse and mix each component.

The thus prepared polyacetal resin composition of the present invention can be molded by various known molding methods such as injection molding, extrusion molding, compression molding, vacuum molding, blow molding and foam molding.

The thus molded article comprising the polyacetal resin composition of the present invention has sufficiently suppressed surface gloss, and the degree of its surface gloss is not more than 25%, preferably not more than 20%, especially preferably not more than 15% in its surface glossiness determined by the method in Examples as described later (use of mirror-finished die).

Recently in the field of automobile, most of interior parts are subjected to grain-processing called skin graining and stain finished graining in order to provide feeling of quality and comfortable hand touch, and the reduction in gloss with mirror-finished die and high transferability onto a grain-processed surface are required.

Usual polyacetal resins cannot meet such requirements due to high crystallinity thereof, but in the polyacetal composition of the present invention, a surface of a molded article is modified by the action of blended components, which remarkably improves transferability onto a grain-processed surface and further reducing glossiness on a grain-processed surface of a molded article.

It is preferable that the molded article of the present invention is one obtained by molding with a metallic die having an inner surface subjected to partly or wholly grain-processing to have a partly or wholly grained surface. Grain-processing of an inner surface of a metallic die can be carried out by corrosion processing such as chemical etching or electric discharge machining, and the surface roughness of a grained pattern can be selected depending on desired appearance of a molded article.

Examples

The present invention will be explained below by means of Examples, but is not limited to them. Every "part" referred to in Examples and Comparative Examples represent part by weight. Characteristics evaluated in Examples and Comparative Examples and methods of the evaluation are as follows.

(1) Surface characteristics of molded article (surface glossiness)

A test sample (70 mm × 50 mm × 3 mm thick) was molded under the following conditions using a mirror-finished die.

* Molding machine: SG50 SYCAP-M produced by Sumitomo Heavy Industries, Ltd.

* Molding conditions:

| | | | | |
|---|---|---|---|---|
| Cylinder temperature (°C) | Nozzle | C1 | C2 | C3 |
| | 200 | 200 | 180 | 160 |
| Injection pressure | 60 (MPa) | | | |
| Injection rate | 1.0 (m/min) | | | |
| Die temperature | 80 (°C) | | | |

<Surface glossiness>

Glossiness of a test sample prepared by molding with a mirror-finished die was measured at 45°-45° reflection with a glossmeter (HG-246 of Suga Test Instruments Co., Ltd.) in accordance with JIS K7105 Measurement of Glossiness.

(2) Weather resistance

The test sample prepared above by molding with a mirror-finished die was used, and the sample was irradiated with ultraviolet light at a black panel temperature of 83°C using an ultraviolet fade meter (Model FAL-AU•H•B•Em of Suga Test Instruments Co., Ltd.), and the occurrence of cracking and the change of surface states thereof were evaluated.

<Presence or nonpresence of cracking>

The test sample was irradiated with ultraviolet light for a given period of time (400 hrs, 600 hrs, 800 hrs, 1,000 hrs) under the prescribed conditions, and the presence or nonpresence of cracking was observed with a microscope having a magnification of x50 and was evaluated under the following criteria.

○: No cracking occurred.
Δ: Extremely small cracking was observed with a microscope (magnification of ×50)
▲: Cracking was observed with a microscope (magnification of ×50)
×: Occurrence of cracking was partly observed with naked eyes.
××: Occurrence of cracking was observed all over a sample surface with naked eyes.

<Change of surface states>

The test sample was irradiated with ultraviolet light for a given period of time (400 hrs, 600 hrs, 800 hrs, 1,000 hrs) under the prescribed conditions, and a change of hue of the sample before and after the irradiation. The smaller a figure is, the smaller a change is, which means that discoloration is small.

(3) Formaldehyde generation amount from molded article

Flat test samples (100 mm × 40 mm × 2 mm thick) were produced by molding under the following conditions using polyacetal resin compositions prepared in Examples and Comparative Examples. Two flat test samples (total weight precisely measured: about 22 g) were hung on a lid of a polyethylene bottle (1 liter) containing 50 ml distilled water, and the bottle was tightly closed. The bottle was allowed to stand in a thermostatic chamber at 60°C for three hours, and then allowed to stand at room temperature for one hour. The amount of formaldehyde generated from the flat test sample and absorbed in distilled water in the polyethylene bottle was measured in accordance with JIS K0102, 29 (Formaldehyde), and the amount (μg/g) of formaldehyde generated per unit weight of the sample was calculated.
* Molding machine: J75E-P produced by The Japan Steel Works, Ltd.
* Molding conditions:

| | | | | |
|---|---|---|---|---|
| Cylinder temperature (°C) | Nozzle | C1 | C2 | C3 |
| | 190 | 190 | 180 | 160 |
| Injection pressure | 60 (MPa) | | | |
| Injection rate | 1.0 (m/min) | | | |
| Die temperature | 50 (°C) | | | |

Examples 1 to 8

To a polyacetal resin (A) were blended a weathering stabilizer (B), a core-shell polymer (C) and an isocyanate compound (D) in amounts shown in Table 1, and further if required, thereto were blended a hindered phenol-based antioxidant, a nitrogen-containing compound having function of scavenging formaldehyde, and a lubricant. Examples 4, 6, 7 and 8, which include a hindered amine based compound are examples of the invention. The mixture was subjected to melt-kneading with a 30 mm twin screw extruder to prepare a composition in the form of pellet. Then, this pellet was molded under the above-mentioned molding conditions (1) by using an injection molding machine to prepare a test sample, and surface characteristics (surface states and surface glossiness) and weather resistance of the molded article were evaluated. In addition, a test sample was prepared by molding under the above-mentioned molding conditions (3) by using an injection molding machine, and an amount of formaldehyde generated from the molded article was measured. The results are shown in Table 2.

Comparative Examples 1 to 8

Compositions were prepared in the same manner as in Examples except that any one component or plural components of a weathering stabilizer (B), a core-shell polymer (C) and an isocyanate compound (D) used in the above-mentioned Examples were not blended as shown in Table 1, and characteristics thereof were evaluated. The results are shown in Table 2.
Compounds used in Examples and Comparative Examples are as follows.

- Polyacetal resin (A)

  A-1: Polyacetal copolymer (produced by Polyplastics Co., Ltd.) having hemi-formal end group of 0.38 mmol/kg, formyl end-group of 0.03 mmol/kg and a melt index (190°C, 2,160 g of load) of 9 g/10 min

- Weathering stabilizer (B)

B-1: 2-(2H-benzotriazole-2-yl)-4,6-bis(1-methyl-1-phenylethyl)phenol (trade name: TINUVIN234)
B-2: Bis(2,2,6,6-tetramethyl-4-piperidyl)sebacate (trade name: TINUVIN770DF)
B-3: Condensate of 1,2,3,4-butanetetracarboxylic acid, 1,2,2,6,6-pentamethyl-4-piperidinol and β,β,β',β'-tetramethyl-3,9-(2,4,8,10-tetraoxaspiro[5,5]-undecane)-diethanol (trade name: ADEKASTAB LA-63P)

• Core-shell polymer (C)

C-1: Alkyl acrylate-alkyl methacrylate copolymer (STAPHYLOID PO-0935 produced by GANZ CHEMICAL CO., LTD.)

• Isocyanate compound (D)

D-1: Isophorone diisocyanate (trimer) (trade name VESTANAT T1890/100)

• Nitrogen-containing compound (E)

E-1: Melamine
E-2: Benzoguanamine (produced by NIPPON SHOKUBAI CO., LTD.)
E-3: 1,3-bis(hydrazinocarbonoethyl)-5-isopropylhydantoin (produced by Ajinomoto Fine-Techno Co., Inc.)

• Antioxidant (F)

F-1: Pentaerythritoltetrakis[3-(3,5-di-t-butyl-4-hydroxyphenyl)propionate] (trade name IRGANOX 1010)

• Lubricant (G)

G-1: Ethylenebisstearylamide

• Other stabilizers (H)

H-1: calcium 12-hydroxy stearate

Table 1

| | | Examples | | | | | | | | Comparative Examples | | | | | | | |
|---|---|---|---|---|---|---|---|---|---|---|---|---|---|---|---|---|---|
| | | 1 | 2 | 3 | 4 | 5 | 6 | 7 | 8 | 1 | 2 | 3 | 4 | 5 | 6 | 7 | 8 |
| Polyacetal Resin (Part By Weight) | (A-1) | 100 | 100 | 100 | 100 | 100 | 100 | 100 | 100 | 100 | 100 | 100 | 100 | 100 | 100 | 100 | 100 |
| Weathering Stabilizer (Part By Weight) | (B-1) | 0.8 | 0.8 | 0.8 | 0.4 | 0.4 | 0.4 | 0.4 | 0.4 | 0.8 | 0.4 | 0.4 | 0.4 | 0.4 | | 0.8 | 0.4 |
| | (B-2) | 0.4 | 0.4 | 0.4 | | 0.4 | | | | 0.4 | | 0.4 | | | | 0.4 | |
| | (B-3) | | | | 0.5 | | 0.5 | 0.5 | 0.5 | | 0.5 | | 0.5 | 0.5 | | | 0.5 |
| Core-Shell Polymer (Part By Weight) | (C-1) | 5.5 | 5.5 | 5.5 | 5.5 | 5.5 | 5.5 | 5.5 | 5.5 | 5.5 | 5.5 | 5.5 | 5.5 | | 5.5 | | 5.5 |
| Isocyanate Compound (Part By Weight) | (D-1) | 0.5 | 0.3 | 0.1 | 0.5 | 0.5 | 0.5 | 0.1 | 0.3 | | | | | | 0.5 | 0.5 | |
| Nitrogen-Containing Compound (Part By Weight) | (E-1) | | | | | 0.15 | 0.15 | 0.15 | | | | 0.15 | 0.15 | | | | |
| | (E-2) | 0.8 | 0.8 | 0.8 | 0.5 | | | | | 0.8 | 0.5 | | | 0.5 | 0.8 | 0.8 | |
| | (E-3) | | | | | | | | 0.2 | | | | | | | | 0.2 |
| Antioxidant (Part By Weight) | (F-1) | | | | 0.1 | | 0.1 | 0.1 | 0.1 | | 0.1 | | 0.1 | 0.1 | | | 0.1 |
| Lubricant (Part By Weight) | (G-1) | 0.17 | 0.17 | 0.17 | 0.17 | 0.17 | 0.17 | 0.17 | 0.17 | 0.17 | 0.17 | 0.17 | 0.17 | 0.17 | 0.17 | 0.17 | 0.17 |
| Stabilizer (Part By Weight) | (H-1) | 0.07 | 0.07 | 0.07 | 0.07 | 0.07 | 0.07 | 0.07 | 0.07 | 0.07 | 0.07 | 0.07 | 0.07 | 0.07 | 0.07 | 0.07 | 0.07 |

Table 2

| | Surface glossiness (%) | Formaldehyde generation amount (μg/g) | Weather resistance | | | | | | | |
|---|---|---|---|---|---|---|---|---|---|---|
| | | | 400 hrs | | 600 hrs | | 800 hrs | | 1000 hrs | |
| | | | ΔE* | Crack | ΔE* | Crack | ΔE* | Crack | ΔE* | Crack |
| Ex. 1 | 19.0 | 2.3 | 0.2 | ○ | 1.4 | Δ | 2.0 | × | 1.5 | ×× |
| Ex. 2 | 16.8 | 2.7 | 0.4 | ○ | 0.4 | Δ | 1.4 | ▲ | 1.0 | ×× |
| Ex. 3 | 21.0 | 2.7 | 0.4 | ○ | 0.9 | Δ | 1.5 | ▲ | 1.2 | ×× |
| Ex. 4 | 13.3 | 2.2 | 0.5 | ○ | 1.0 | ▲ | 1.2 | ▲ | 3.6 | ×× |
| Ex. 5 | 11.9 | 5.4 | 1.4 | ○ | 0.7 | ○ | 1.7 | ○ | 1.4 | Δ |
| Ex. 6 | 14.8 | 2.6 | 0.2 | ○ | 1.4 | ○ | 1.7 | Δ | 1.4 | ▲ |
| Ex. 7 | 21.8 | 2.6 | 0.7 | ○ | 1.3 | Δ | 1.3 | Δ | 0.9 | ▲ |
| Ex. 8 | 16.0 | 2.0 | 0.3 | ○ | 1.0 | ○ | 1.9 | Δ | 1.7 | Δ |
| Com. Ex. 1 | 28.1 | 2.3 | 0.1 | ○ | 1.5 | ○ | 1.5 | × | 1.2 | ×× |
| Com. Ex. 2 | 29.6 | 2.0 | 0.4 | ○ | 0.9 | ▲ | 1.1 | ▲ | 3.0 | ×× |
| Com. Ex. 3 | 16.8 | 4.9 | 0.7 | ○ | 0.7 | ○ | 1.0 | ○ | 1.0 | Δ |
| Com. Ex. 4 | 19.0 | 2.3 | 0.3 | ○ | 1.4 | ○ | 1.6 | Δ | 1.5 | ▲ |
| Com. Ex. 5 | 86.7 | 1.0 | - | - | - | - | - | - | - | - |
| Com. Ex. 6 | 15.3 | 1.4 | 3.9 | ×× | - | - | - | - | - | - |
| Com. Ex. 7 | 82.2 | 1.4 | - | - | - | - | - | - | - | - |
| Com. Ex. 8 | 21.8 | 1.6 | 0.4 | ○ | 1.2 | ○ | 1.7 | Δ | 1.6 | Δ |

## Claims

**1.** A polyacetal resin composition comprising:

100 parts by weight of (A) a polyacetal resin;
0.01 to 5 parts by weight of (B) a weathering stabilizer wherein the weathering stabilizer (B) is a combination of one, two or more selected from the group consisting of a benzotriazole-based compound, a benzophenone-based compound, an oxanilide-based compound, an aromatic benzoate-based compound, and a cyanoacrylate-based compound with a hindered amine-based compound which has a sterically hindered amino group of a tertiary nitrogen;
1 to 50 parts by weight of (C) a core-shell polymer having a core of a rubbery polymer and a shell of a glassy polymer composed of a vinyl-based copolymer wherein the rubbery polymer is a rubbery polymer formed by polymerizing monomers including a conjugated diene, an alkylacrylate having an alkyl group with 2 to 8 carbon atoms or a mixture thereof and wherein the glassy polymer is composed of a vinyl-based copolymer having an oxygen-containing polar group; and
0.01 to 5 parts by weight of (D) a compound selected from the group consisting of a diisocyanate compound, diisothiocyanate compound, a dimer thereof and trimer thereof.

2. The polyacetal resin composition according to claim 1, wherein the glassy polymer is composed of vinyl-based copolymer having an oxygen-containing polar group which has a unit formed by polymerizing an acrylate of an alcohol or a methacrylate of an alcohol, having two or more oxygen-containing polar groups in its molecule.

3. The polyacetal resin composition according to claim 1, wherein the vinyl-based copolymer having an oxygen-containing polar group has a unit formed by polymerizing (meth) acrylate of an alcohol having an oxygen-containing polar group.

4. The polyacetal resin composition according to claim 1 or claim 3, wherein the oxygen-containing polar group is a hydroxyl group and/or a glycidyl group.

5. The polyacetal resin composition according to claim 1, wherein the (meth)acrylate of an alcohol having an oxygen-containing polar group is hydroxyethyl methacrylate or glycidyl methacrylate.

6. The polyacetal resin composition according to claim 1, wherein the core-shell polymer (C) is obtained by emulsion polymerization using a nonionic surfactant or an oligomer-type surfactant.

7. The polyacetal resin composition according to any of claims 1 to 3, wherein the compound (D) is one selected from the group consisting of 4,4'-methylenebis(phenylisocyanate), isophorone diisocyanate, 1,5-naphthalene diisocyanate, 1,6-hexamethylene diisocyanate, 2,4-tolylene diisocyanate, 2,6-tolylene diisocyanate, a dimer thereof and a trimer thereof.

8. The polyacetal resin composition according to any one of claims 1 to 3, further comprising 0.01 to 3 parts by weight of a hindered phenol-based antioxidant to 100 parts by weight of the polyacetal resin (A).

9. The polyacetal resin composition according to any one of claims 1 to 3, further comprising 0.01 to 3 parts by weight of one or two or more compounds selected from the group consisting of a guanamine compound, a hydrazide compound and a triazine compound to 100 parts by weight of the polyacetal resin (A).

10. The polyacetal resin composition according to any one of claims 1 to 3, further comprising 0.01 to 5 parts by weight of one or two or more compounds selected from the group consisting of a fatty acid ester, an aliphatic ether, a polyhydric alcohol and a polyalkylene glycol to 100 parts by weight of the polyacetal resin (A).

11. The polyacetal resin composition according to any one of claims 1 to 3, further comprising 0.1 to 10 parts by weight of a coloring component to 100 parts by weight of the polyacetal resin (A).

12. A polyacetal resin molded article, prepared by molding the composition according to claim 1.

## Patentansprüche

1. Eine Polyacetalharzzusammensetzung bestehend aus:

   100 Masseteilen eines Polyacetalharzes (A);
   0,05 bis 5 Masseteilen eines Witterungsstabilisators (B), wobei der Witterungsstabilsator (B) eine Kombination von einer oder mehreren Verbindungen ist, die aus der Gruppe bestehend aus Folgenden ausgewählt werden, nämlich einer Verbindung auf Benzotriazol-Basis, einer Verbindung auf Benzophenon-Basis, einer Verbindung auf Oxanilid-Basis, einer aromatischen Verbindung auf Benzoat-Basis und einer Verbindung auf Cyanacrylat-Basis mit einer behinderten Verbindung auf Amin-Basis, die eine sterisch behinderte Aminogruppe eines tertiären Stickstoffs aufweist;
   1 bis 50 Masseteilen eines Kern-Schale-Polymers (C) mit einem Kern aus einem gummiartigen Polymer und einer Schale mit einem glasartigen Polymer, der sich aus einem Polymer auf Vinyl-Basis zusammensetzt, wobei das gummiartige Polymer ein gummiartiges Polymer ist, der durch Polymerisation von Monomeren, einschließlich eines konjugierten Diens, eines Alkylacrylats mit einer Alkylgruppe mit 2 bis 8 Kohlenstoffatomen oder einer Mischung dieser, gebildet wird und wobei sich das glasartige Polymer aus einem Copolymer auf Vinyl-Basis mit einer sauerstoffhaltigen polaren Gruppe zusammensetzt; und
   0,01 bis 5 Masseteilen einer Verbindung (D), die aus der Gruppe bestehend aus einer Diisocyanat-Verbindung, Diisothiocyanat-Verbindung, einem Dimer dieser und einem Trimer dieser ausgewählt wird.

2. Die Polyacetalharzzusammensetzung entsprechend Anspruch 1, wobei sich das glasartige Polymer aus einem Copolymer auf Vinyl-Basis mit einer sauerstoffhaltigen polaren Gruppe zusammensetzt, der eine Einheit aufweist, die durch Polymerisation eines Acrylats eines Alkohols oder eines Methacrylats eines Alkohols gebildet wird, das zwei oder mehr sauerstoffhaltige polare Gruppen in seinem Molekül hat.

3. Die Polyacetalharzzusammensetzung entsprechend Anspruch 1, wobei das Copolymer auf Vinyl-Basis mit einer sauerstoffhaltigen polaren Gruppe eine Einheit aufweist, die durch Polymerisation von (Meth)acrylat eines Alkohols mit einer sauerstoffartigen polaren Gruppe gebildet wird.

4. Die Polyacetalharzzusammensetzung entsprechend Anspruch 1, oder Anspruch 3, wobei die sauerstoffhaltige polare Gruppe eine Hydroxylgruppe und/oder eine Glycidylgruppe ist.

5. Die Polyacetalharzzusammensetzung entsprechend Anspruch 1, wobei das (Meth)acrylat eines Alkohols mit einer sauerstoffhaltigen polaren Gruppe Hydroxyethylmethacrylat oder Glycidylmethacrylat ist.

6. Die Polyacetalharzzusammensetzung entsprechend Anspruch 1, wobei das Kern-Schale-Polymer (C) durch Emulsionspolymerisation unter Verwendung eines nichtionischen Tensids oder eines oligomerartigen Tensids erhalten wird.

7. Die Polyacetalharzzusammensetzung entsprechend einem der Ansprüche 1 bis 3, wobei die Verbindung (D) aus der Gruppe bestehend aus 4,4'-Methylenbis(phenylisocyanat), Isophorondiisocyanat, 1,5-Naphthalendiisocyanat, 1,6-Hexanmethylendiisocyanat, 2,4-Tolylendiisocyanat, 2,6-Tolylendiisocyanat, einem Dimer dieser und einem Trimer dieser ausgewählt wird.

8. Die Polyacetalharzzusammensetzung entsprechend einem der Ansprüche 1 bis 3, die weiterhin 0,01 bis 3 Masseteile eines verhinderten Antioxidans auf Phenol-Basis zu 100 Masseteilen des Polyacetalharzes (A) aufweist.

9. Die Polyacetalharzzusammensetzung entsprechend einem der Ansprüche 1 bis 3, die weiterhin 0,01 bis 3 Masseteile von einer oder mehreren Verbindungen, die aus der Gruppe bestehend aus einer Guanaminverbindung, einer Hydrazidverbindung und einer Triazinverbindung ausgewählt wird/werden, zu 100 Masseteilen des Polyacetalharzes (A) aufweist.

10. Die Polyacetalharzzusammensetzung entsprechend einem der Ansprüche 1 bis 3, die weiterhin 0,01 bis 5 Masseteile von einer oder mehreren Verbindungen, die aus der Gruppe bestehend aus einem Fettsäureester, einem aliphatischen Ether, einem polyhydrischen Alkohol und einem Polyalkylengylcol ausgewählt wird/werden, zu 100 Masseteilen des Polyacetalharzes (A) aufweist.

11. Die Polyacetalharzzusammensetzung entsprechend einem der Ansprüche 1 bis 3, die weiterhin 0,01 bis 10 Masseteile eines Farbbestandteils zu 100 Masseteilen des Polyacetalharzes (A) aufweist.

12. Ein Formteil aus Polyacetalharz, das durch Formen der Zusammensetzung entsprechend Anspruch 1 erstellt wird.

**Revendications**

1. Une composition de résine de polyacétal contenant :

   100 parties en poids de (A) une résine de polyacétal,
   0,01 à 5 parties en poids de (B) un stabilisateur de résistance aux intempéries où le stabilisateur de résistance aux intempéries (B) est une combinaison d'un, de deux ou plus éléments sélectionnés dans le groupe se composant d'un composé à base de benzotriazole, d'un composé à base de benzophénone, d'un composé à base d'oxanilide, d'un composé à base de benzoate aromatique et d'un composé à base de cyanoacrylate avec un composé à base d'amine encombré qui possède un groupe amino à encombrement stérique d'un azote tertiaire,
   1 à 50 parties en poids de (C) un polymère noyau-enveloppe possédant un noyau d'un polymère caoutchouteux et une enveloppe d'un polymère vitreux composé d'un copolymère à base de vinyle où le polymère caoutchouteux est un polymère caoutchouteux formé par la polymérisation de monomères contenant un diène conjugué, un acrylate d'alkyle possédant un groupe alkyle avec 2 à 8 atomes de carbone ou un mélange de ceux-ci et

où le polymère vitreux est composé d'un copolymère à base de vinyle possédant un groupe polaire contenant de l'oxygène, et
0,01 à 5 parties en poids de (D) un composé sélectionné dans le groupe se composant d'un composé diisocyanate, d'un composé diisothiocyanate, d'un dimère de ceux-ci et d'un trimère de ceux-ci.

**2.** La composition de résine de polyacétal selon la Revendication 1, où le polymère vitreux est composé d'un copolymère à base de vinyle possédant un groupe polaire contenant de l'oxygène qui possède une unité formée par la polymérisation d'un acrylate d'un alcool ou d'un méthacrylate d'un alcool, possédant deux ou plus groupes polaires contenant de l'oxygène dans sa molécule.

**3.** La composition de résine de polyacétal selon la Revendication 1, où le copolymère à base de vinyle possédant un groupe polaire contenant de l'oxygène possède une unité formée par la polymérisation de (méth) acrylate d'un alcool possédant un groupe polaire contenant de l'oxygène.

**4.** La composition de résine de polyacétal selon la Revendication 1 ou 3, où le groupe polaire contenant de l'oxygène est un groupe hydroxyle et/ou un groupe glycidyle.

**5.** La composition de résine de polyacétal selon la Revendication 1, où le (méth) acrylate d'un alcool possédant un groupe polaire contenant de l'oxygène est un méthacrylate d'hydroxyéthyle ou un méthacrylate de glycidyle.

**6.** La composition de résine de polyacétal selon la Revendication 1, où le polymère noyau-enveloppe (C) est obtenu par polymérisation en émulsion au moyen d'un agent tensio-actif non ionique ou d'un agent tensio-actif de type oligomère.

**7.** La composition de résine de polyacétal selon l'une quelconque des Revendications 1 à 3, où le composé (D) est un élément sélectionné dans le groupe se composant de 4,4'-méthylènebis(phénylisocyanate), isophorone diisocyanate, 1,5-naphthalène diisocyanate, 1,6-hexaméthylène diisocyanate, 2,4-tolylène diisocyanate, 2,6-tolylène diisocyanate, un dimère de ceux-ci et un trimère de ceux-ci.

**8.** La composition de résine de polyacétal selon l'une quelconque des Revendications 1 à 3, contenant en outre 0,01 à 3 parties en poids d'un antioxydant à base de phénol encombré pour 100 parties en poids de la résine de polyacétal (A).

**9.** La composition de résine de polyacétal selon l'une quelconque des Revendications 1 à 3, contenant en outre 0,01 à 3 parties en poids d'un ou deux ou plus composés sélectionnés dans le groupe se composant d'un composé de guanamine, d'un composé d'hydrazide et d'un composé de triazine pour 100 parties en poids de la résine de polyacétal (A).

**10.** La composition de résine de polyacétal selon l'une quelconque des Revendications 1 à 3, contenant en outre 0,01 à 5 parties en poids d'un ou deux ou plus composés sélectionnés dans le groupe se composant d'un ester d'acide gras, d'un éther aliphatique, d'un alcool polyhydrique et d'un glycol polyalkylène pour 100 parties en poids de la résine de polyacétal (A).

**11.** La composition de résine de polyacétal selon l'une quelconque des Revendications 1 à 3, contenant en outre 0,1 à 10 parties en poids d'un composant colorant pour 100 parties en poids de la résine de polyacétal (A).

**12.** Un article moulé en résine de polyacétal préparé par moulage de la composition selon la Revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5179104 A
- JP 5125255 A
- JP 10182928 A
- JP 10298201 A
- JP 2005162909 A
- JP 2005163019 A
- WO 2004058875 A
- JP 7165935 A
- EP 0430215 A
- JP 7195496 A
- JP 7195476 A
- JP 6248162 A
- EP 0549338 A
- EP 0561582 A
- JP 5255570 A
- JP 47034832 B